# EUROPEAN PATENT APPLICATION

(11) **EP 4 579 777 A1**
(43) Date of publication of application: **02.07.2025**
(21) Application number: 23857381.0
(22) Date of filing: 23.08.2023
(51) Int. Cl.: H01M 4/06, H01M 6/16

(54) **LITHIUM PRIMARY BATTERY**

(30) Priority: 24.08.2022 JP 2022133269
(71) Applicant: Panasonic Intellectual Property Management Co., Ltd., Kadoma-shi, Osaka 571-0057 (JP)
(72) Inventor: NISHITANI Satoshi, Kadoma-shi, Osaka 571-0057 (JP)
(74) Representative: Novagraaf International SA
(86) International application number: PCT/JP2023/030295
(87) International publication number: WO 2024/043273

(57) **Abstract**

A lithium primary battery includes a positive electrode, a negative electrode, and a nonaqueous electrolyte solution. The positive electrode contains manganese dioxide and the negative electrode contains a lithium alloy. The lithium alloy contains magnesium. The percentage content of the magnesium in the lithium alloy is 10 % by mass or less.

## Description

### [Technical Field]

The present disclosure relates to a lithium primary battery.

### [Background Art]

Lithium primary batteries are used as power sources for many electronic devices because of their high energy density and low self-discharge. For the positive electrode of a lithium primary battery, manganese dioxide is used, for example. For the negative electrode of the lithium primary battery, metal lithium or lithium alloy in sheet (foil) form is used, for example.

Patent Literature 1 proposes a nonaqueous electrolyte battery in which a positive electrode, a negative electrode, and an electrolyte solution constituted by a solute and an organic solvent are provided in a battery can, and lithium trifluoromethanesulfonate is used as the solute, wherein the negative electrode is made of a lithium alloy. In Examples of Patent Literature 1, Li-Al, Li-In, or Li-Sn is used as the lithium alloy.

### [Citation List]

### [Patent Literature]

Patent Literature 1: Japanese Laid-Open Patent Publication No. H2-15566

### [Summary of Invention]

### [Technical Problem]

Battery capacity may decrease due to degradation of a negative electrode in a lithium primary battery.

### [Solution to Problem]

One aspect of the present disclosure relates to a lithium primary battery including: a positive electrode, a negative electrode, and a nonaqueous electrolyte solution, wherein the positive electrode includes manganese dioxide, the negative electrode includes a lithium alloy, the lithium alloy includes magnesium, and a percentage content of the magnesium in the lithium alloy is 10% by mass or less.

### [Advantageous Effects of Invention]

According to the present disclosure, a decrease in capacity of a lithium primary battery can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawing]

[Figure] Figure is a front view, partially in cross-section, of a lithium primary battery according to an embodiment of the present disclosure.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. In the present description, the phrase "a numerical value A to a numerical value B" means to include the numerical value A and the numerical value B, and can be replaced with "a numerical value A or more and a numerical value B or less". In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one kind of them may be selected and used singly, or two or more types of them may be used in combination.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

A lithium primary battery according to an embodiment of the present disclosure includes a positive electrode, a negative electrode, and a nonaqueous electrolyte solution. The positive electrode contains manganese dioxide and the negative electrode contains a lithium alloy. The lithium alloy contains magnesium (Mg), and the percentage content of Mg in the lithium alloy is 10% by mas or less.

As a result of the lithium alloy containing Mg, strength of the negative electrode is increased, thereby inhibiting partial damage or breakage of the negative electrode due to expansion of the positive electrode during discharge, and suppressing a decrease in capacity due to a decrease in strength. As a result of the lithium alloy containing Mg, side reactions between the negative electrode and the electrolyte solution are inhibited, thereby suppressing a decrease in capacity due to the side reactions. The side reactions are likely to occur in high temperature environments. When the percentage content of Mg in the lithium alloy is 10% by mass or less, a decrease in capacity due to a decrease in amount of Li (absolute amount of Li) in the negative electrode can be suppressed. As a result, high capacity can be achieved both in initial discharge and after long-term storage, and the capacity degradation rate after storage can be significantly reduced. When the percentage content of Mg in the lithium alloy is set larger than 10% by mass, the amount of Li (absolute amount of Li) in the negative electrode is decreased, leading to a decrease in capacity, although the effectiveness of strength increase and side reaction inhibition by the lithium alloy containing Mg becomes significant.

The lithium alloy used for the negative electrode is foil- shaped (sheet- shaped), for example. In view of increasing the capacity, the percentage content of Li in the lithium alloy may be, for example, 90% by mass or more, or 95% by mass or more.

The percentage content of Mg in the lithium alloy is 10% by mass or less, and may be 0.01% by mass or more and 10% by mass or less, or 0.5% by mass or more and 5% by mass or less.

In the lithium alloy, Mg may be dispersed or unevenly distributed. In the lithium alloy foil, Mg may be unevenly distributed in either or both the thickness direction and the surface direction of the foil. In both cases of Mg being dispersed and Mg being unevenly distributed, the negative electrode containing Mg has high strength, and a decrease in capacity is suppressed as compared with the negative electrode containing no Mg, with a result that degradation of the negative electrode in high-temperature storage is inhibited.

The lithium alloy may contain another metal element other than Li and Mg. Examples of the other metal element include Al, Sn, Ni, Pb, In, K, Fe, and Si. The total percentage content of the metal elements other than lithium contained in the lithium alloy may be 0.05% by mass or more and 15% by mass or less (or 10% by mass or less) in view of securing discharge capacity and stabilizing internal resistance.

The percentage content of each element in the lithium alloy is determined by inductively coupled plasma (ICP) emission spectroscopy or atomic absorption spectroscopy (AAS).

### (Additive in Nonaqueous Electrolyte Solution)

The nonaqueous electrolyte solution preferably contains at least one additive selected from the group consisting of a cyclic imide compound, a phthalic acid ester compound, and an isocyanate compound. When the nonaqueous electrolyte solution contains any of the above additives, a composite film containing Mg derived from the lithium alloy and a component derived from the additive may be formed on the surface of the lithium alloy (negative electrode) containing Mg. Since the film has excellent chemical stability and contains Mg derived from the lithium alloy, wettability of the negative electrode to the nonaqueous electrolyte solution is improved to reduce resistance of the negative electrode. With this film, Li on the surface of the negative electrode tends to be consumed uniformly.

The percentage content of the additive in the nonaqueous electrolyte solution is 0.01% by mass or more and 5% by mass or less, for example. The percentage content of the additive in the nonaqueous electrolyte solution is a mass rate (percentage) of the additive to the entirety of the nonaqueous electrolyte solution. For example, the percentage content of the additive in the nonaqueous electrolyte solution is preferably within the above range immediately after production of the battery (or at the time of preparation of the nonaqueous electrolyte solution). By contrast, in a battery after a certain period of time has elapsed from immediately after production, a portion of the additive is consumed for forming the film. As such, the percentage content of the additive in the nonaqueous electrolyte solution may become lower than the above range. In this case, even if the percentage content of the additive in the nonaqueous electrolyte solution is small (e.g., a value close to the detection limit), the above-described effect by the additive is recognized. The same applies to the percentage contents of various compounds such as the cyclic imide compound described later.

### (Cyclic Imide Compound)

Examples of the cyclic imide compound include cyclic diacylamine compounds. The cyclic imide compound should have a diacylamine ring (hereinafter, also referred to as an imide ring). To the imide ring, another ring (hereinafter also referred to as a second ring) may be fused. The cyclic imide compound may be contained in the nonaqueous electrolyte solution in an imide state or in a form of an anion or a salt. When the cyclic imide compound is contained in the nonaqueous electrolyte solution in an imide state, the cyclic imide compound may exist in a form with a free NH group or in a form of a tertiary amine.

Examples of the second ring include aromatic rings and saturated or unsaturated aliphatic rings. The second ring may have at least one heteroatom. Examples of the heteroatom include an oxygen atom, a sulfur atom, and a nitrogen atom.

Examples of the cyclic imide compound include aliphatic dicarboxylic acid imide compounds and cyclic imide compounds having a second ring. An example of the aliphatic dicarboxylic acid imide compounds is succinimide. Examples of the cyclic imide compounds having a second ring include imide compounds of aromatic or alicyclic dicarboxylic acids. Examples of the aromatic dicarboxylic acids and alicyclic dicarboxylic acids include those having a carboxy group at each of two adjacent atoms constituting rings thereof. Examples of the cyclic imide compounds having a second ring include phthalimide and hydrogenated products of phthalimide. Examples of the hydrogenated products of phthalimide include cyclohexa-3-ene-1,2-dicarboximide and cyclohexane-1,2-dicarboximide.

The imide ring may be an N-substituted imide ring having a substituent at the nitrogen atom of the imide. Examples of the substituent include a hydroxy group, alky groups, alkoxy groups, and halogen atoms. Examples of the alkyl groups include C1-C4 alkyl groups, and an example alkyl group may be a methyl group or an ethyl group, for example. Examples of the alkoxy groups include C1-C4 alkoxy groups, and an example alkoxy group may be a methoxy group or an ethoxy group, for example. Examples of the halogen atoms include a chlorine atom and a fluorine atom.

The cyclic imide compound is preferably at least one selected from the group consisting of phthalimide and N-substituted phthalimide. The substituent on the nitrogen atom of N-substituted phthalimide may be selected from the substituents exemplified for the N-substituted imide ring. N-substituted phthalimide preferably includes at least one selected from the group consisting of N-hydroxyphthalimide, N-(2-hydroxyethyl)phthalimide, N-(cyclohexylthio)phthalimide, and N-(phenylthio)phthalimide, for example. Either or total of phthalimide and N-substituted phthalimide may account for 50% by mass or more, preferably 70% by mass or more, or 90% by mass or more of the cyclic imide compound.

The nonaqueous electrolyte solution may contain one cyclic imide compound or two or more cyclic imide compounds. The percentage content of the cyclic imide compound(s) in the nonaqueous electrolyte solution may be 1% by mass or less, and may be 0.001% by mass or more and 1% by mass or less, or 0.001% by mass or more and 0.8% by mass or less.

### (Phthalic Acid Ester Compound)

The phthalic acid ester compound contains phthalic acid ester and a derivative thereof.

The derivative may have a substituent attached to an aromatic ring derived from phthalic acid. Examples of the substituent include a hydroxy group, alky groups, alkoxy groups, and halogen atoms. Examples of the alkyl groups include C1-C4 alkyl groups, and an example alkyl group may be a methyl group or an ethyl group, for example. Examples of the alkoxy groups include C1-C4 alkoxy groups, and an example alkoxy group may be a methoxy group or an ethoxy group, for example. Examples of the halogen atoms include a chlorine atom and a fluorine atom.

The phthalic acid ester compound may be a phthalic acid monoester compound. However, a phthalic acid diester compound is desirable from the point of view that the formed film tends to protect the surface of the Li alloy. As an alcohol forming the ester with the phthalic acid (or the derivative thereof), a C1-C20 (preferably C1-C6) saturated or unsaturated aliphatic alcohol is desirable.

Specific examples of the phthalic acid diester compound include dimethyl phthalate, diethyl phthalate, diallyl phthalate, dibutyl phthalate, diisobutyl phthalate, and bis(2-ethylhexyl) phthalate. These may be used singly or in combination of two or more. The phthalic acid diester compound may account for 50% by mass or more, preferably 70% by mass or more, or 90% by mass or more of the phthalic acid ester compound.

The nonaqueous electrolyte solution may contain one or two or more phthalic acid ester compounds. The percentage content of the phthalic acid ester compound(s) in the nonaqueous electrolyte solution may be 1% by mass or less, and may be 0.1% by mass or more and 1% by mass or less.

### (Isocyanate Compound)

The isocyanate compound has, for example, at least one isocyanate group and a C1-C20 aliphatic hydrocarbon group or a C6-C20 aromatic hydrocarbon group. The aliphatic hydrocarbon group or the aromatic hydrocarbon group constituting the isocyanate compound may have a substituent. The substituent should be any group that can be stably present, and may be a halogen atom or a nitrile group, for example. The aliphatic group may be an alicyclic aliphatic group or a linear or branched aliphatic group. The aromatic hydrocarbon group is a hydrocarbon group having one or more aromatic rings, and may be a group in which an aromatic ring and an aliphatic group are bonded.

The isocyanate compound may be a monoisocyanate compound having one isocyanate group. However, a diisocyanate compound having two isocyanate groups is desirable. It is considered that the diisocyanate compound produces a composite film that is more chemically stable than that a monoisocyanate compound produces and that is less resistive than triisocyanate. In addition, the diisocyanate compound exhibits a high ability to form a composite film, even when used in a small amount, and is excellent in stability in batteries.

Specific examples of the diisocyanate compound include compounds represented by OCN-CₙH₂ₙ-NCO (n represents an integer of 1 to 10) (e.g., hexamethylene diisocyanate), compounds having an alicyclic diyl group (e.g., 1,3-bis(isocyanatomethyl)cyclohexane, dicyclohexylmethane-4,4'-diisocyanate, bicyclo [2.2.1]heptane-2,5-diylbis(methyl isocyanate), bicyclo[2.2.1]heptane-2,6-diylbis(methyl isocyanate), and isophorone diisocyanate), 2,2,4-trimethylhexamethylene diisocyanate, 2,4,4-trimethylhexamethylene diisocyanate, and hexyl isocyanate. Among these, at least one selected from the group consisting of hexamethylene diisocyanate, 1,3-bis(isocyanatomethyl)cyclohexane, and isophorone diisocyanate is preferable. These may account for 50% by mass or more, preferably 70% by mass or more, or 90% by mass or more of the isocyanate compound.

When a diisocyanate compound is added to the nonaqueous electrolyte solution, the molecules of the diisocyanate compound may react with each other in the battery (in the nonaqueous electrolyte solution) to form an isocyanurate body, a urea body, or a burette body. Therefore, when the battery is disassembled for analysis of the nonaqueous electrolyte solution, an isocyanurate, a urea, or a bullet derived from the diisocyanate compound may be detected.

The nonaqueous electrolyte solution may contain one or two or more isocyanate compounds. The percentage content of the isocyanate compound(s) in the nonaqueous electrolyte solution may be 3% by mass or less, and may be 0.01% by mass or more and 2% by mass or less, or 0.01% by mass or more and 1.5% by mass or less.

For analysis of the nonaqueous electrolyte solution (additive), liquid chromatography mass spectrometry (LC/MS) or gas chromatography mass spectrometry (GC/MS) can be used, for example. Ultraviolet spectroscopy (UV) may be performed along with nuclear magnetic resonance spectroscopy (NMR), infrared absorptiometry (IR), or mass spectroscopy (MS).

Hereinafter, the lithium primary battery of the present disclosure will be described in more detail.

### [Lithium Primary Battery]

### (Positive Electrode)

The positive electrode contains manganese dioxide as a positive electrode active material. As the manganese dioxide, electrolytic manganese dioxide is preferably used. A positive electrode containing manganese dioxide exhibits a relatively high voltage and is excellent in pulse discharge characteristics. The manganese dioxide may be in a mixed crystal state including multiple types of crystal states. The positive electrode may contain a manganese oxide other than manganese dioxide. Examples of the manganese oxide other than manganese dioxide include MnO, Mn₃O₄, Mn₂O₃, and Mn₂O₇. The main component of the manganese oxide contained in the positive electrode is preferably manganese dioxide. Here, the main component means that the proportion of the manganese dioxide in the manganese oxide is 50% by mass or more. The proportion of the manganese dioxide in the manganese oxide may be 70% by mass or more, or may be 90% by mass or more.

The positive electrode active material may contain another active material other than manganese dioxide. Examples of the other active material include graphite fluoride, iron disulfide, and antimony trisulfide. The proportion of the other active material other than manganese dioxide in the entire positive electrode active material may be 0.5% by mass or more and 10% by mass or less.

The positive electrode may contain a positive electrode mixture containing, for example, a positive electrode active material, a binder, and a conductive agent. Examples of the binder include rubber particles, acrylic resins, polyimide resins, and fluororesins such as polytetrafluoroethylene. Examples of the conductive agent include conductive carbon materials. Examples of the conductive carbon materials include natural graphite, artificial graphite, carbon black, carbon fiber, and carbon nanotubes.

The positive electrode may further include a positive electrode current collector holding the positive electrode mixture. Examples of the material of the positive electrode current collector include stainless steel, aluminum, and titanium.

In a case of a coin-shaped battery, the positive electrode may be formed by attaching a ringshaped positive electrode current collector with an L-shape in cross section to a positive electrode mixture pellet, or the positive electrode may be formed of only the positive electrode mixture pellet. The positive electrode mixture pellet is obtained, for example, by press-forming a positive electrode mixture in a wet state prepared by adding an appropriate amount of water to, for example, a positive electrode active material, followed by drying.

In a case of a cylindrical battery, a positive electrode including a sheet-shaped positive electrode current collector and a positive electrode mixture layer held by the positive electrode current collector can be used. As the sheet-shaped positive electrode current collector, a perforated current collector is preferable. Examples of the perforated current collector include expanded metal, net, and punched metal. The positive electrode mixture layer is obtained, for example, by applying the positive electrode mixture in a wet state onto the surface of a sheet-shaped positive electrode current collector, or filling the positive electrode mixture in the positive electrode current collector, followed by pressing in the thickness direction and drying.

### (Negative Electrode)

The negative electrode contains the aforementioned lithium alloy. The lithium alloy is formed into any shape and thickness according to, for example, the shape, size, and standard performance of the lithium primary battery. The negative electrode may include a negative electrode current collector of, for example, a copper foil together with a lithium alloy sheet. Since the lithium alloy contains Mg and Mg having relatively high strength remains in the end of discharge, the negative electrode may be formed using only the lithium alloy sheet (foil) without using the negative electrode current collector. With the lithium alloy containing Mg, partial damage or breakage of the negative electrode in the end of discharge can be inhibited, and Li in the negative electrode can be used effectively, without wasting any of its full amount.

In a case of a coin-shaped battery, a product of a hoop-shaped lithium alloy punched into a disk shape may be used as the negative electrode. In a case of a cylindrical battery, a sheet-like lithium alloy may be used as the negative electrode. The sheet is obtained by extrusion forming, for example. More specifically, in the cylindrical battery, a lithium alloy foil in a shape having a longitudinal direction and a lateral direction is used, for example.

The negative electrode may include an active material layer containing either or both a silicon-containing material and a carbon material capable of absorbing and releasing lithium ions.

### (Nonaqueous Electrolyte Solution)

The nonaqueous electrolyte solution contains a nonaqueous solvent and a lithium salt, for example. The concentration of lithium ion (total concentration of the lithium salt) contained in the nonaqueous electrolyte solution is, for example, 0.2 mol/L or more and 2.0 mol/L or less, and may be 0.3 mol/L or more and 1.5 mol/L or less.

Examples of the nonaqueous solvent include organic solvents that are generally used in nonaqueous electrolyte solutions of lithium primary batteries. Examples of the nonaqueous solvent include ethers, esters, and carbonates. Examples of the nonaqueous solvent include dimethyl ether, γ-butyl lactone, propylene carbonate (PC), ethylene carbonate (EC), dimethyl carbonate, diethyl carbonate, ethyl methyl carbonate, 1,2-dimethoxyethane (DME), 1,2-diethoxyethane, methyl acetate, ethyl acetate, and propyl acetate. The nonaqueous electrolyte solution may contain a single nonaqueous solvent or two or more nonaqueous solvents.

In of view of improving discharge characteristics of the lithium primary battery, the nonaqueous solvent preferably contains a cyclic carbonate having a high boiling point and a chain ether having a low viscosity even at low temperatures. The cyclic carbonate preferably includes at least one selected from the group consisting of PC and EC, and particularly preferably includes PC. The chain ether preferably includes DME.

Examples of the lithium salt include lithium salts used as solutes in lithium primary batteries. Examples of such lithium salts include LiCF₃SO₃, LiClO₄, LiBF₄, LiPF₆, LiRaSO₃ (Ra represents a fluorinated alkyl group having 1 to 4 carbon atoms), LiFSO₃, LiN(SO₂Rb)(SO₂Rc) (Rb and Rc each represent, independently of one another, a fluorinate alkyl group having 1 to 4 carbon atoms), LiN(FSO₂)₂, LiN(SO₂CF₃)2, LiN(SO₂F)(POF₂), LiPO₂F₂, LiB(C₂O₄)₂, and LiBF₂(C₂O₄). Among these, at least one selected from the group consisting of LiCF₃SO₃, LiBF₄, and LiN(FSO₂)₂) is preferable from the point of view of stabilization against the lithium alloy containing Mg. The nonaqueous electrolyte solution may contain one or two or more of these lithium salts.

The nonaqueous electrolyte solution may further contain another component such as the aforementioned additive. Examples of the other component other than the additive include propane sultone, propene sultone, ethylene sulphite, 3,2-dioxathiolane-2,2-dioxide, vinylene carbonate, vinyl ethylene carbonate, fluoroethylene carbonate, adiponitrile, succinonitrile, and succinic anhydride. The other component may be a lithium salt or may be a component capable of producing lithium ions.

### (Separator)

Usually, a lithium primary battery includes a separator provided between a positive electrode and a negative electrode. As the separator, a porous sheet formed of an insulating material resistant to the internal environment of lithium primary batteries should be used. Specific examples thereof include nonwoven fabrics made of synthetic resins, microporous films made of synthetic resins, and laminates of these.

Examples of the synthetic resins used for the nonwoven fabrics include polypropylene, polyphenylene sulfide, and polybutylene terephthalate. Examples of the synthetic resins used for the microporous films include polyolefin resins such as polyethylene, polypropylene, and ethylenepropylene copolymers. The microporous films may contain inorganic particles as necessary.

The thickness of the separator is 5 µm or more and 100 µm or less, for example.

No limitations are placed on the configuration of the lithium primary battery. The lithium primary battery may be a coin-shaped battery including a stacked electrode group constituted by a disk-shaped positive electrode and a disk-shaped negative electrode stacked with a separator therebetween. Alternatively, the battery may be a cylindrical battery including a wound electrode group constituted by a belt-shaped positive electrode and a belt-shaped negative electrode wouned in a spiral state with a separator therebetween.

Figure is a front view, partially in cross-section, of a cylindrical lithium primary battery according to an embodiment of the present disclosure. In a lithium primary battery 10, an electrode group in which a positive electrode 1 and a negative electrode 2 are wound with a separator 3 therebetween is housed in a battery case 9 together with a nonaqueous electrolyte solution (not illustrated). A sealing plate 8 is attached to the opening of the battery case 9. A positive electrode lead 4 connected to a current collector 1a of the positive electrode 1 is connected to the sealing plate 8. A negative electrode lead 5 connected to the negative electrode 2 is connected to the battery case 9. Further, an upper insulating plate 6 and a lower insulating plate 7 are respectively provided on the upper part and the lower part of the electrode group in order to prevent internal short circuits.

### <<Supplemental Remarks>>

According to the above description of the embodiment, the following techniques are disclosed.

### (Technique 1)

A lithium primary battery including:
a positive electrode;
a negative electrode; and
a nonaqueous electrolyte solution, wherein
the positive electrode contains manganese dioxide,
the negative electrode contains a lithium alloy,
the lithium alloy contains magnesium, and
a percentage content of the magnesium in the lithium alloy is 10% by mass or less.

### (Technique 2)

The lithium primary battery according to Technique 1, wherein the nonaqueous electrolyte solution contains at least one additive selected from the group consisting of a cyclic imide compound, a phthalic acid ester compound, and an isocyanate compound.

### (Technique 3)

The lithium primary battery according to Technique 2, wherein the cyclic imide compound contains at least one selected from the group consisting of phthalimide and N-substituted phthalimide.

### (Technique 4)

The lithium primary battery according to Technique 3, wherein the N-substituted phthalimide includes at least one selected from the group consisting of N-hydroxyphthalimide, N-(2-hydroxyethyl)phthalimide, N-(cyclohexylthio)phthalimide, and N-(phenylthio)phthalimide.

### (Technique 5)

The lithium primary battery according to any of Techniques 2 to 4, wherein a percentage content of the cyclic imide compound in the nonaqueous electrolyte solution is 1% by mass or less.

### (Technique 6)

The lithium primary battery according to any of Technique 2 to 5, wherein the phthalic acid ester compound includes a phthalic acid diester compound.

### (Technique 7)

The lithium primary battery according to Technique 6, wherein the phthalic acid diester compound contains dimethyl phthalate.

### (Technique 8)

The lithium primary battery according to any one of Techniques 2 to 7, wherein a percentage content of the phthalic acid ester compound in the nonaqueous electrolyte solution is 1% by mass or less.

### (Technique 9)

The lithium primary battery of any of Technique 2 to 8, wherein the isocyanate compound includes a diisocyanate compound.

### (Technique 10)

The lithium primary battery according to Technique 9, wherein the diisocyanate compound contains at least one selected from the group consisting of hexamethylene diisocyanate, 1,3-bis(isocyanatomethyl)cyclohexane, and isophorone diisocyanate.

### (Technique 11)

The lithium primary battery of any one of Techniques 2 to 10, wherein a percentage content of the isocyanate compound in the nonaqueous electrolyte solution is 3% by mass or less.

### [Examples]

Hereinafter, the present disclosure will be described in detail based on examples and comparative examples. However, the present disclosure is not limited to the following examples.

### <<Examples 1 to 5 and Comparative Examples 1 and 2>>

### (Positive Electrode Preparation)

To 100 parts by mass of a positive electrode active material, 5 parts by mass of Ketj en Black being a conductive agent, 5 parts by mass of polytetrafluoroethylene being a binder, and an appropriate amount of pure water were added. The resulting mixture was kneaded to prepare a positive electrode mixture in a wet state. As the positive electrode active material, electrolytic manganese dioxide (MnO₂) was used.

The positive electrode mixture was then filled in a positive electrode current collector formed of expanded metal, with a thickness of 0.1 mm, made of stainless steel (SUS444) to prepare a positive electrode precursor. Thereafter, the positive electrode precursor was dried, rolled using a roll press, and cut to a length of 3.5 cm and a width of 20 cm to obtain a positive electrode. Subsequently, a portion of the filled positive electrode mixture was peeled off, and one end of a positive electrode lead made of SUS444 was resistance-welded to a part where the positive electrode current collector was exposed.

### (Negative Electrode Preparation)

Negative electrodes were obtained by cutting lithium alloy foils (thickness: 250 µm) to a length of 3.7 cm and a width of 22 cm. One end of a negative electrode lead made of nickel was connected to a predetermined point of any of the negative electrodes by pressure welding. As the lithium alloy foils, Li-Mg alloy foils having the respective percentage contents of Mg shown in Tables 1 or a Li-Al alloy foil (Al percentage content: 2% by mass) were used. The percentage contents of Mg and the like in the lithium alloys were determined by ICP emission spectrometry or atomic absorption spectrometry. The "-" in the columns titled "Mg content" and similar headings under the column titled "Lithium alloy" indicates that Mg or similar elements were not detected by ICP emission spectrometry or atomic absorption spectrometry.

### (Electrode Group Production)

Any of the prepared positive electrodes and any of the prepared negative electrodes were wound with a separator therebetween to prepare an electrode group. A microporous film, with a thickness of 25 µm, made of polypropylene was used as the separator.

### (Nonaqueous Electrolyte Solution Preparation)

A nonaqueous electrolyte solution was prepared by dissolving LiCF₃SO₃ in a mixed solvent (volume ratio: 3:2:5) of PC, EC, and DME at a concentration of 0.5 mol/L.

### (Lithium Primary Battery Assembly)

Any of the electrode groups was housed in a cylindrical battery case that also serves as a negative electrode terminal. An iron case (outer diameter 17 mm, height 45.5 mm) was used as the battery case. Next, after the nonaqueous electrolyte solution was injected into the battery case, the opening of the battery case was closed with a metal sealing plate that also serves as a positive electrode terminal. The other end of the positive electrode lead was connected to the sealing plate, and the other end of the negative electrode lead was connected to the inner bottom surface of the battery case. In the manner described above, lithium primary batteries were produced. In Table 1, A1 to A5 indicate produced batteries of Examples 1 to 5, and B1 and B2 indicate produced batteries of Comparative Examples 1 and 2.

The obtained batteries of Examples and Comparative Examples were aged in an atmosphere at 45°C for 3 days after the assembly, and the following evaluations were performed.

### [Evaluation]

### (Initial Capacity)

Constant current discharge was performed on each of the aged batteries at 2.5 mA in an environment at 20°C until the battery voltage reached 0.9 V The discharge time in the discharge was measured to determine the initial capacity.

### (Post-Storage Capacity)

Each of the aged batteries was stored in an environment at 85°C for 3 months. After the storage, the battery was discharged at a constant current of 2.5 mAin an environment at 20°C until the battery voltage reached 0.9 V The discharge time in the discharge was measured to determine the post-storage capacity.

### (Capacity Degradation Rate After Storage)

Using the initial capacity and the post-storage capacity determined as above, the capacity degradation rate after the storage was determined using the following equation. Capacity degradation rate after storage (%) = {1 - (post-storage capacity/initial capacity)} × 100

Evaluation results are shown in Table 1. The initial capacities and the post-storage capacities in Table 1 are expressed as relative values (indices) when the initial capacity of the battery B1 of Comparative Example 1 is 100.

**[Table 1]**

| Li Primary battery | Positive electrode active material | Negative electrode active material (Li alloy) | | Evaluation | | |
|---|---|---|---|---|---|---|
| | | Mg content (% by mass) | Al content (% by mass) | Initial capacity (index) | Post-storage capacity (index) | Post-storage capacity degradation rate (%) |
| A1 | MnO₂ | 0.01 | - | 103 | 92 | 10.7 |
| A2 | MnO₂ | 0.5 | - | 110 | 99 | 10.0 |
| A3 | MnO₂ | 2.0 | - | 111 | 101 | 9.0 |
| A4 | MnO₂ | 5.0 | - | 107 | 99 | 7.5 |
| A5 | MnO₂ | 10.0 | - | 105 | 97 | 7.6 |
| B1 | MnO₂ | - | 2.0 | 100 | 85 | 15.0 |
| B2 | MnO₂ | 12.0 | - | 97 | 85 | 12.4 |

Compared with the batteries B1 and B2, the batteries A1 to A5 exhibited higher initial and post-storage capacities and a lower capacity degradation rate.

### <<Examples 6 to 14>>

In the negative electrode preparation, lithium alloy foils with a percentage content of Mg of 1% by mass were each used as the lithium alloy foil. In the nonaqueous electrolyte solution preparation, an additive was further contained in the nonaqueous electrolyte solution as necessary. The compounds shown in Table 2 were used each as the additive. The percentage contents of the additives in the nonaqueous electrolyte were each set to a corresponding one of the values shown in Table 2.

Batteries A6 to A14 of Examples 6 to 14 were produced and evaluated in the same manner as that for the battery A1 of Example 1 except the above.

Evaluation results are shown in Table 2. The initial capacities and the post-storage capacities in Table 2 are expressed as relative values (indices) when the initial capacity of the battery B1 of Comparative Example 1 is 100.

**[Table 2]**

| Li primary battery | Positive electrode active material | Negative electrode active material (Li alloy) | Additive in electrolyte solution | | Evaluation | | |
|---|---|---|---|---|---|---|---|
| | | Mg content (% by mass) | Compound | Content | **Initial** capacity (index) | Post-storage capacity (index) | Post-storage capacity degradation rate (%) |
| A6 | MnO₂ | 1.0 | - | - | 110 | 101 | 8.2 |
| A7 | MnO₂ | 1.0 | Phthalimide | 0.5 | 117 | 112 | 4.3 |
| A8 | MnO₂ | 1.0 | N-hydroxyphthalimide | 0.5 | 115 | 108 | 6.1 |
| A9 | MnO₂ | 1.0 | N-(2-hydroxyethyl)phthalimide | 0.5 | 114 | 106 | 7.0 |
| A10 | MnO₂ | 1.0 | N-(phenylthio)phthalimide | 0.5 | 114 | 107 | 6.1 |
| A11 | MnO₂ | 1.0 | Hexamethylene diisocyanate | 1.0 | 119 | 113 | 5.0 |
| A12 | MnO₂ | 1.0 | 1,3-Bis(isocyanatomethyl)cyclohexane | 1.0 | 117 | 109 | 6.8 |
| A13 | MnO₂ | 1.0 | Isophorone diisocyanate | 1.0 | 118 | 111 | 5.9 |
| A14 | MnO₂ | 1.0 | Dimethyl phthalate | 1.0 | 113 | 105 | 7.1 |

Each of the batteries A6 to A14 exhibited high initial and post-storage capacities and a low capacity degradation rate. In the batteries A7 to A14 in which an additive was contained in the nonaqueous electrolyte solution, the capacity degradation rate was further reduced.

### [Industrial Applicability]

The lithium primary battery of the present disclosure is suitably used, for example, as a main power supply or a memory backup power supply of various meters (e.g., smart meters for measuring electricity, water, and gas consumption).

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

1: positive electrode, 1a: positive electrode current collector, 2: negative electrode, 3: separator, 4: positive electrode lead, 5: negative electrode lead, 6: upper insulating plate, 7: lower insulating plate, 8: sealing plate, 9: battery case, 10: lithium primary battery

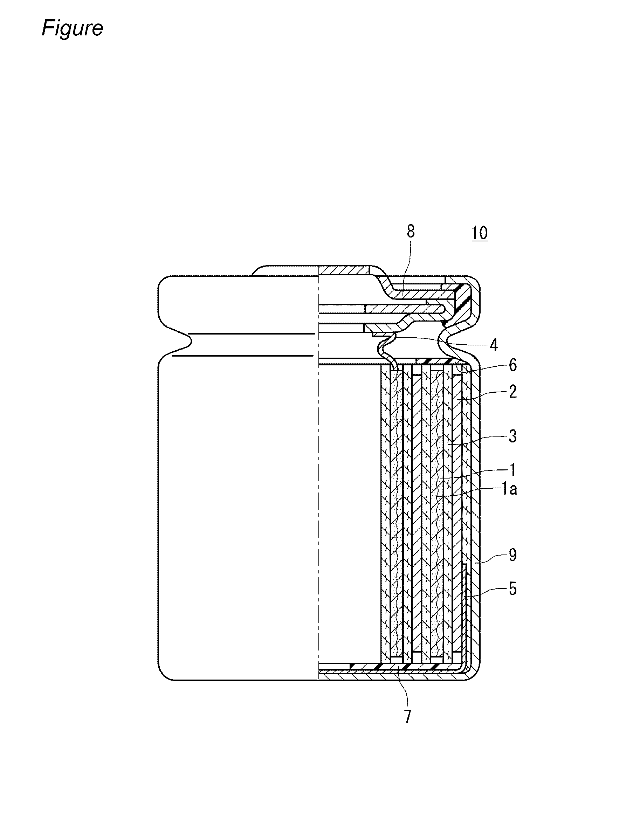

## Claims

1. A lithium primary battery comprising:
a positive electrode;
a negative electrode; and
a nonaqueous electrolyte solution, wherein
the positive electrode contains manganese dioxide,
the negative electrode contains a lithium alloy,
the lithium alloy contains magnesium, and
a percentage content of the magnesium in the lithium alloy is 10% by mass or less.

2. The lithium primary battery according to claim 1, wherein
the nonaqueous electrolyte solution contains at least one additive selected from the group consisting of a cyclic imide compound, a phthalic acid ester compound, and an isocyanate compound.

3. The lithium primary battery according to claim 2, wherein
the cyclic imide compound contains at least one selected from the group consisting of phthalimide and N-substituted phthalimide.

4. The lithium primary battery according to claim 3, wherein
the N-substituted phthalimide includes at least one selected from the group consisting of N-hydroxyphthalimide, N-(2-hydroxyethyl)phthalimide, N-(cyclohexylthio)phthalimide, and N-(phenylthio)phthalimide.

5. The lithium primary battery according to claim 2, wherein
a percentage content of the cyclic imide compound in the nonaqueous electrolyte solution is 1% by mass or less.

6. The lithium primary battery according to claim 2, wherein
the phthalic acid ester compound includes a phthalic acid diester compound.

7. The lithium primary battery according to claim 6, wherein
the phthalic acid diester compound contains dimethyl phthalate.

8. The lithium primary battery according to claim 2, wherein
a percentage content of the phthalic acid ester compound in the nonaqueous electrolyte solution is 1% by mass or less.

9. The lithium primary battery according to claim 2, wherein
the isocyanate compound includes a diisocyanate compound.

10. The lithium primary battery according to claim 9, wherein
the diisocyanate compound contains at least one selected from the group consisting of hexamethylene diisocyanate, 1,3-bis(isocyanatomethyl)cyclohexane, and isophorone diisocyanate.

11. The lithium primary battery according to claim 2, wherein
a percentage content of the isocyanate compound in the nonaqueous electrolyte solution is 3% by mass or less.
